# EUROPEAN PATENT SPECIFICATION

(11) **EP 0 392 584 B1**
(45) Date of publication and mention of the grant of the patent: **08.06.1994**
(21) Application number: 90200743.4
(22) Date of filing: 29.03.1990
(51) Int. Cl.: A21C 3/02

(54) **Device for reversing a sheet of dough coming out of a pair of rolls**
Vorrichtung zum Wenden einer Teigplatte, die zwei Rollen verlässt
Appareil pour retourner une feuille de pâte qui quitte deux rouleaux

(30) Priority: 10.04.1989 NL 8900891
(43) Date of publication of application: 17.10.1990
(73) Proprietor: WERNER & PFLEIDERER-HATON B.V., NL-5981 NK Panningen (NL)
(72) Inventor: Van den Berg, Theodoor Henricus, NL-5688 TX Oirschot (NL); Janssen, Antonius Marie, NL-5987 NC Egchel (NL); Haenen, Jozef Willem Marie, NL-5987 AK Egchel (NL)
(74) Representative: Lips, Hendrik Jan George, Ir.

(56) References cited:
- EP-A- 0 256 991
- DE-A- 1 432 310
- FR-A- 2 274 220
- GB-A- 593 279
- GB-A- 1 290 704
- NL-A- 7 602 376

## Description

The invention relates to a device as described in the preamble of claim 1.

Such a device was manufactured by applicant and in this known device the conveyor belt, forming part of said transfer conveyor, is having a length which is about equal to the length of the sheet of dough. When the sheet of dough arrives onto the conveyor belt it is moving in a given direction. When the sheet is completely lying on the belt the direction of movement of the belt is reversed and the sheet is either supplied to the discharge conveyor or to a pair of rolls positioned in front of this.

By the use of such a transfer conveyor the capacity of the device as a whole is considerably diminished. This is also caused by the fact that the velocity of movement of the sheet of dough may not be too high because by this an unfavourable effect should be exerted on the piece of dough, such that the advantage of reversing the piece of dough should be undone.

Now the object of the invention is to provide a device of the type described above which occupies less space and with which a high capacity can be obtained during a relatively low velocity of movement.

According to the invention this is obtained by applying the features as indicated in the characterizing portion of claim 1.

In this way it is obtained that during the greatest part of the time that the lump of dough, supplied to the pair of rolls, is laminated, this sheet of dough is hanging free from the conveyor belt. So the conveyor belt is exerting no forces to the sheet of dough while during the time that the sheet of dough is moving downwards, the conveyor belt may move in opposite direction for bringing the preceding sheet of dough to the discharge conveyor.

Preferably it will be provided, that a sensor is provided in front of the pair of rolls, said sensor signalizing the arrival of a sheet of dough and, via an adjustable time delay, taking care for the movement of said framework from the end position in which the sheet of dough is freely hanging down from the conveyor belt. In this way it can be obtained that just before the sheet of dough is released by the rolls the framework is moved for receiving the sheet of dough.

According to a preferred embodiment of the invention the framework, as seen in cross section, mainly is in the shape of half a cylindrical shell over which the conveyor is guided, said framework being rotatable in respect of the axis of said cylindrical shell, the portion of the conveyor belt running over the two rolls, positioned near the ends of the diameter of said half-cylinder, being positioned directly beside a sheet of dough coming from said pair of rolls in the one end position of said framework.

By this a device can be obtained which occupies less space only.

For a good transfer of the sheet of dough from the conveyor belt onto the discharge conveyor and for an easy driving of the conveyor itself, it can be provided that the conveyor belt is running over a fixedly positioned drive roll provided close to the discharge conveyor such that the portion of the conveyor belt extending towards the discharge conveyor extends itself substantially horizontally.

As will be described afterwards a portion of the cylindrical shell can be left out to decrease the friction between the cylindrical shell and the conveyor belt running over it. In this case a change in the length, if any, in the path described by the conveyor belt, will have to be taken into account. Such a change of length e.g. can be compensated by a spring loaded positioned guiding roll.

Preferably it will be provided, that a support means is connected to said framework at some distance from that portion of the conveyor belt extending itself over the rolls positioned near the ends of the diameter of said half-cylinder, such that a sheet of dough can freely hang down between this means and the conveyor belt during the passage of the sheet of dough through the pair of rolls.

When now the framework is rotated to the other position the sheet of dough will be supported by the support means and will no longer be hanging free downwards, by which the sheet of dough might be pulled from the belt. In particular this might be the case when the sheet of dough is having a rather great length.

Because during releasing the sheet of dough by the pair of rolls said framework is moving, said sheet of dough may be released by the conveyor belt in consequence of the centrifugal force, because the sheet of dough might be tensioned somewhat and because the sheet of dough will crimp somewhat in longitudinal direction. By this the sheet of dough might slid from the wall.

To prevent this according to the invention it can be provided, that a fixedly positioned arc-shaped support means is present extending itself at the other side of the sheet of dough than the framework when the sheet of dough is freely hanging downwards from the pair of rolls, such that when rotating said framework the sheet of dough can be present between said framework and the arc shaped support means.

In both cases the support means may be formed by a roller track supported in such a way that the distance till the conveyor belt is adjustable.

In this way it is obtained that the sheet of dough is only supported but that no forces are exerted on it by which the movement of it might be opposed.

By the adjustable positioning of the roller track the device can be made suitable for different thicknesses of a sheet of dough.

Also it can be provided, that said arc shaped roller track is pivotably connected near its highest point and is engaging an adjustable stop by means of a spring and/or by means of its own weight, said stop being closer to the lower end of said roller track.

Instead of the half-cylindrical framework use might be made of a carriage or trip beam for supporting one or more guiding rolls. Generally speaking such construction occupies more room. Also the means for supporting the sheet of dough during handling this are more cumbersome of construction.

The invention is further described by means of embodiments shown in the drawing, in which:
Fig. 1 schematically shows a side view of an embodiemnt of the device according to the invention with the parts in the position which they are occupying during the laminating of a sheet of dough by a pair of rolls provided above it;
Fig. 2 shows a view according to Fig. 1 but with the parts of the device in another position; and
Fig. 3 and 4 schematically show side views of other embodiments of the device according to the invention.

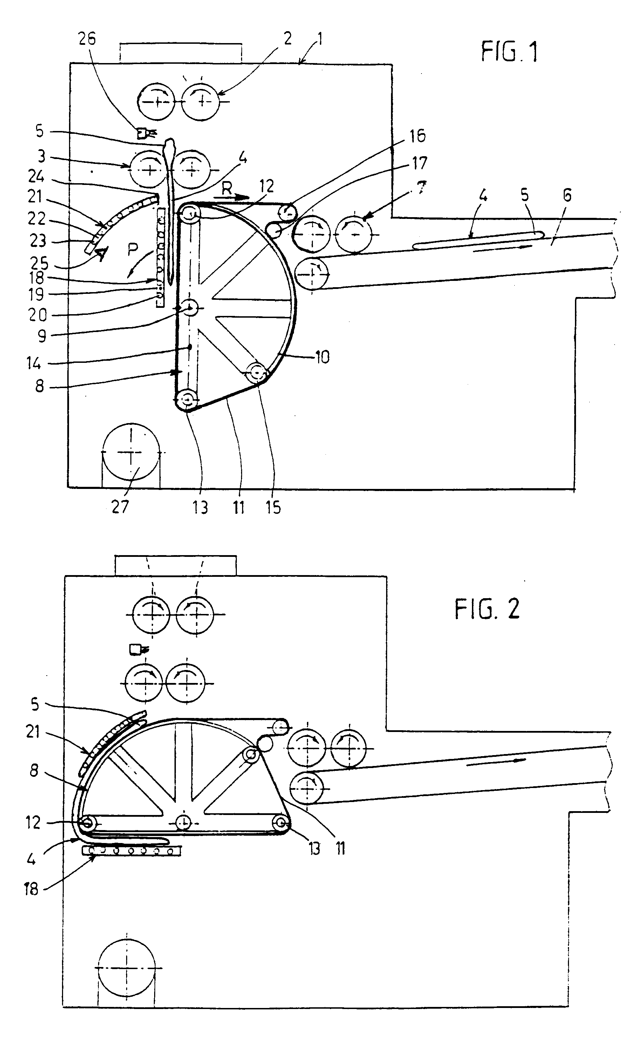

The device shown in the Figs. 1 and 2 comprises a framework 1 for supporting a first pair 2 of rolls and a second pair 3 of rolls. The rolls of the pair 2 and 3 are driven in the direction indicated by the arrows for laminating a lump of dough to a sheet 4 of dough. The object of the invention is to supply the end portion 5 of the sheet 4 of dough, leaving the pair 3 of rolls the latest, as the leading end to a discharge conveyor 6 after having passed a pair 7 of rolls, if any.

To this end the device comprises a framework 8 being rotatable around the axis 9 and having, as seen in cross section, substantially the shape of half of a cylindrical shell 10 to support a conveyor belt 11 running over it. The conveyor belt 11 is running over guiding rolls 12 and 13 present near the end of the center line 14 and over a guiding roll 15. Between the guiding rolls 13 and 15 the cylindrical shell 10 needs not to be present because this portion of it has no further function. Also a portion of the cylindrical shell, joining the roll 15, might be omitted and the conveyor belt 11 might be supported by a roll but then the total length of the conveyor belt will change when the framework is pivoting to the position shown in Fig. 2, so that means might have to be present to compensate this change in length.

The conveyor belt 11 further extends over the driving roll 16 and a guiding roll 17. The latter serves for pressing the conveyor belt 11 against the driving roll 16 over a greater part of the circumference of this and to keep the conveyor belt 11 free from the roll of the pair 7 of rolls.

Opposite the portion of the conveyor belt 11 extending between the rolls 12 and 13 the roller track 18 is present consisting of a frame 19 and the rolls 20 being freely rotatable. The frame 19 is connected to the frame 8 in a not further indicated way so that the distance between the roller track 18 and the conveyor belt 11 may be adjusted.

Further a roller track 21 is connected to the framework 1, consisting of a frame 22 and rolls 23. The frame 22 can be pivotably mounted near its highest point on the shaft 24 and near its lower end it may engage an adjustable stop 25. It is possible that the frame 22 is biased against the stop 25 by means of a spring.

A sensor 26 is provided close above the pair 3 of rolls, said sensor signalizing the arrival of a sheet of dough.

For driving the different parts use can be made of a single motor 27, but it is also possible to drive the parts by separate motors.

The working of the device is as follows.

During the laminating of a lump of dough to the sheet 4 of dough by means of the pairs 2 and 3 of rolls the framework 8 is present in the position as shown in Fig. 1. At a given moment the sensor 26 gives a signal with an adjustable time delay by which the framework 8 is going to move. This time delay depends on the length which is having the sheet 4 of dough after leaving the pair 3 of rolls. Now the frame 8 is pivoted in the direction of the arrow P. This pivoting may take place over a fixed angle but also might be dependent on the length of the sheet 4 of dough. Fig. 2 is showing the position of the framework 8 after this is pivoted over 90°.

During said pivoting the sheet 4 of dough is supported by the roller track 18 which is moving with the framework 8. By this it is prevented that, in particular in case of a long sheet of dough, the sheet will slid from the conveyor belt 11 in respect of its own weight. Also the roller track 21, being positioned at a fixed place, serves to support the sheet 4 of dough.

During the pivoting of the framework 8 the driving roll 16 of the conveyor belt 11 is freely rotatable and so the belt 11 is moving together with the framework 8 and with the cylindrical shell 10.

After pivoting of the framework 8 over a certain angle the sheet 4 of dough will be released by the pair 3 of rolls. Now the direction of rotating of the frame 8 is reversed so that the frame is moving back from the position shown in Fig. 2 to the position shown in Fig. 1. During reversing the direction of movement of the framework 8 the driving roll 16 is switched in and so the conveyor belt 11 will be moved in the direction of the arrow R.

So during the reversed rotation of the framework 8 the sheet 4 of dough is already moved in the direction of the driving roll 16 and at the moment that the framework 8 is moved back to its position shown in Fig. 1, the sheet 4 of dough will totally lie on the horizontal portion of the conveyor belt 11. The succeeding sheet of dough may then already move downwards from the pair 3 of rolls while the conveyor belt 11 is still driven to supply the sheet of dough to the pair 7 of rolls and from this onto the discharge conveyor 6.

In particular in case of long sheets of dough by this a considerable saving in time can be obtained because the time necessary to move the framework 8 to and fro will be considerable shorter than the time necessary to transport a sheet of dough over its whole length.

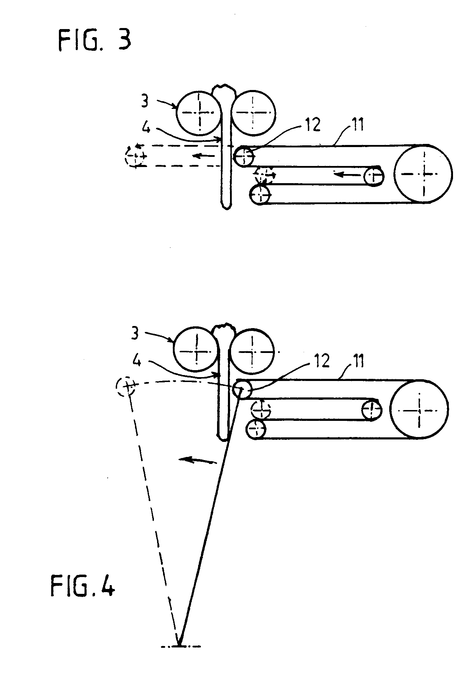

The Figs. 3 and 4 show two further possibilities of the embodiment of the movable framework for supporting guiding rolls of a conveyor belt.

In both cases the conveyor belt is again indicated by 11 and one of the guiding rolls by 12. This guiding roll is positioned close beside the sheet 4 of dough which is hanging downwardly from the pair 3 of rolls, so that the portion of the conveyor belt 11, running over this roll 12, is primary engaging the sheet 4 of dough after the sheet of dough has left the pair 3 of rolls.

In case of the embodiment according to Fig. 3 the roll 12 is supported by a carriage, not further shown, which is movable in horizontal direction so that the roll 12 may be moved towards the position indicated by dash-lines. To have the conveyor belt 11 tensioned, this is guided over two further rolls, one of which is supported by the carriage and the other in a fixed point.

In case of the embodiment according to Fig. 4 the roll 12 is supported by a swinging arm, so that the roll 12 again can be moved towards the position indicated with dash-lines. To have the belt 11 tensioned this again is running over some further, not indicated rolls.

The devices according to the Figs. 3 and 4 may occupy more room and applying the support means for the sheet of dough, as these are formed by the roller tracks 18 and 21 in case of the embodiment according to the Figs. 1 and 2, will give more objections.

It will be obvious, that only some possible embodiments of the device according to the invention are shown in the drawing and are described above and that many modifications can be applied without leaving the inventive concept as defined by the claims.

## Claims

1. Device for reversing a sheet of dough (4), said device comprising: a pair of rolls (3), a discharge conveyor (6) and a transfer conveyor, positioned between said pair of rolls (3) and said discharge conveyor (6), for bringing a sheet of dough (4) coming out of said pair of rolls onto the discharge conveyor in such a direction that the leading portion (5), as seen in the direction of movement of said discharge conveyor (6), of the sheet of dough is that portion that leaves the pair of rolls last, said transfer conveyor comprising a conveyor belt (11) guided over at least one roll (16) being fixedly positioned close to the discharge conveyor (6),
characterized in that said conveyor belt (11) is guided over at least one further roll (12) being provided in a framework (8) which is supported such that it is movable between two end positions, one of said further rolls (12), mounted in said framework (8), in one end position being present beside a vertical plane going through the nip of the pair of rolls, such that it is located directly beside a sheet of dough (4) which is hanging downwards from the nip between both rolls (3), said roll (12) passing below the pair of rolls (3) when the framework (8) is moved to the other end position, such that said sheet of dough (4) is picked up by said conveyor belt (11).

2. Device according to claim 1,
characterized in
that a sensor (26) is provided in front of the pair of rolls (3), said sensor signalizing the arrival of a sheet of dough (4) and, via an adjustable time delay, taking care for the movement of said framework from the end position in which the sheet of dough (4) is freely hanging down from the conveyor belt (11).

3. Device according to claim 1 or 2,
characterized in
that the framework (8), as seen in cross section, mainly is in the shape of half of a cylindrical shell (10), over which the conveyor belt (11) is guided, said framework (8) being rotatable in respect of the axis (9) of said cylindrical shell, the portion of the conveyor belt (11) running over the two rolls (12,13), positioned near the ends of the diameter (14) of said half-cylinder (10), being positioned directly beside a sheet of dough (4) coming from said pair of rolls (3) in the one end position of said framework (8).

4. Device according to claim 3,
characterized in
that the conveyor belt (11) is running over a fixedly positioned drive roll (16) provided close to the discharge conveyor (6) such that the portion of the conveyor belt (11) extending towards the discharge conveyor extends itself substantially horizontally.

5. Device according to one of the claims 3 or 4,
characterized in
that a support means (18) is connected to said framework (8) at some distance from that portion of the conveyor belt (11) extending itself over the rolls (12,13) positioned near the ends of the diameter (14) of said half-cylinder (10), such that a sheet of dough (4) can freely hang down between this means and the conveyor belt (11) during the passage of the sheet of dough (4) through the pair of rolls (3).

6. Device according to one of the claims 3 - 5,
characterized in
that a fixedly positioned arc-shaped support means (21) is present extending itself at the other side of the sheet of dough (4) than the framework (8) when the sheet of dough (4) is freely hanging downwards from the pair of rolls (3), such that when rotating said framework (8) the sheet of dough (4) can be present between said framework (8) and the arc shaped support means (21).

7. Device according to claim 5 or 6,
characterized in
that said support means is shaped by a roller track (18,21) supported in such a way that the distance till the conveyor belt (11) is adjustable.

8. Device according to claim 7,
characterized in
that said arc shaped roller track (21) is pivotably connected near its highest point (24) and is engaging an adjustable stop (25) by means of a spring and/or by means of its own weight, said stop being closer to the lower end of said roller track (21).

9. Device according to claim 1 or 2,
characterized in
that the device comprises a carriage or trip beam for supporting one or more guiding rolls (12) for the conveyor belt (11).

## Patentansprüche

1. Vorrichtung zum Wenden einer Teiglage (4), umfassend: zwei Rollen (3), einen Austragförderer (6) und einen zwischen den beiden Rollen (3) und dem Austragförderer (6) angeordneten Umsetzförderer zum Verbringen einer aus den beiden Rollen austretenden Teiglage (4) auf den Austragförderer in einer solchen Richtung, daß der vorlaufende Bereich (5), in der Bewegungsrichtung des Austragförderers (6) gesehen, der Teiglage derjenige Bereich ist, der zuletzt aus den beiden Rollen austritt, wobei der Umsetzförderer ein Förderband (11) aufweist, das über mindestens eine (dicht) neben dem Austragförderer (6) positionierte Rolle (16) geführt ist,
dadurch gekennzeichnet, daß das Förderband (11) über mindestens eine weitere Rolle (12) geführt ist, die in einem Rahmenwerk (8) vorgesehen ist, welches so gelagert ist, daß es zwischen zwei Endstellungen bewegbar ist, wobei eine der weiteren Rollen (12), die im Rahmenwerk (8) montiert bzw. gelagert ist, in der einen Endstellung neben einer durch den Spalt der beiden Rollen verlaufenden lotrechten Ebene liegt, so daß sie unmittelbar neben einer vom Spalt zwischen den beiden Rollen (3) herabhängenden Teiglage (4) angeordnet ist, wobei die Rolle (12) bei der Bewegung des Rahmenwerks (8) zur anderen Endstellung unter den beiden Rollen (3) hindurchläuft, so daß die Teiglage (4) vom Förderband (11) abgenommen wird.

2. Vorrichtung nach Anspruch 1,
dadurch gekennzeichnet,
daß vorderhalb der beiden Rollen (3) ein Sensor (26) vorgesehen ist, der die Ankunft der Teiglage (4) meldet und über eine einstellbare Zeitverzögerung für die Bewegung des Rahmenwerks aus der Einstellung, in welcher die Teiglage (4) frei vom Förderband (11) herabhängt, sorgt.

3. Vorrichtung nach Anspruch 1 oder 2,
dadurch gekennzeichnet,
daß das Rahmenwerk (8), im Querschnitt gesehen, weitgehend die Form einer Hälfte einer Zylinderschale (10) aufweist, über welche das Förderband (11) geführt ist, das Rahmenwerk (8) in bezug auf (um) die Achse (9) der Zylinderschale drehbar ist, (und) das über die beiden Rollen (12, 13), die nahe der Enden des Durchmessers (14) des Halbzylinders (10) angeordnet sind, laufende Trum des Förderbands (11) in der einen Endstellung des Rahmenwerks (8) unmittelbar neben einer aus den beiden Rollen (3) austretenden Teiglage (4) positioniert ist.

4. Vorrichtung nach Anspruch 3,
dadurch gekennzeichnet,
daß das Förderband (11) über eine fest angeordnete, (dicht) neben dem Austragförderer (6) vorgesehene Antriebsrolle (16) derart läuft, daß das in Richtung auf den Austragförderer verlaufende Trum des Förderbands (11) für sich im wesentlichen waagerecht verläuft.

5. Vorrichtung nach einem der Ansprüche 3 oder 4,
dadurch gekennzeichnet,
daß eine Stützeinrichtung (18) mit dem Rahmenwerk (8) in einigem Abstand von dem für sich über die Rollen (12, 13), die nahe der Enden des Durchmessers (14) des Halbzylinders (10) angeordnet sind, laufenden Trum des Förderbands (11) verbunden ist, so daß eine Teiglage (4) beim Durchlauf der Teiglage (4) zwischen den beiden Rollen (3) frei zwischen dieser Einrichtung und dem Förderband (11) herabhängen kann.

6. Vorrichtung nach einem der Ansprüche 3 bis 5,
dadurch gekennzeichnet,
daß eine fest positionierte, bogenförmige Stützeinrichtung (21) vorgesehen ist, die ihrerseits dann, wenn die Teiglage (4) von den beiden Rollen (3) frei herabhängt, an der vom Rahmenwerk (8) abgewandten Seite der Teiglage (4) verläuft, so daß beim Drehen des Rahmenwerks (8) die Teiglage (4) zwischen dem Rahmenwerk (8) und der bogenförmigen Stützeinrichtung (21) zu liegen kommt.

7. Vorrichtung nach Anspruch 5 oder 6 , dadurch gekennzeichnet, daß die Stützeinrichtung durch eine Rollenbahn (18, 21) gebildet ist, die so gehaltert oder gelagert ist, daß der Abstand bis zum Förderband (11) einstellbar ist.

8. Vorrichtung nach Anspruch 7, dadurch gekennzeichnet, daß die bogenförmige Rollenbahn (21) in der Nähe ihres höchsten Punkts (24) schwenkbar verbunden (gelagert) und mittels einer Feder und/oder unter ihrem Eigengewicht gegen einen einstellbaren Anschlag (25) in Anlage bringbar ist, welcher Anschlag näher am unteren Ende der Rollenbahn (21) angeordnet ist.

9. Vorrichtung nach Anspruch 1 oder 2, dadurch gekennzeichnet, daß die Vorrichtung einen Schlitten oder Schaltträger zur Lagerung einer oder mehrerer Führungsrollen (12) für das Förderband (11) aufweist.

## Revendications

1. Appareil pour retourner une feuille de pâte (4), comprenant : une paire de rouleaux (3), un transporteur d'évacuation (6) et un transporteur de transfert, disposé entre la paire de rouleaux (3) et le transporteur d'évacuation (6), pour amener une feuille de pâte (4) sortant de la paire de rouleaux sur le transporteur d'évacuation dans une direction telle que la portion avant (5), vue dans la direction du déplacement du transporteur d'évacuation (6) de la feuille de pâte, est la portion qui sort de la paire de rouleaux en dernier, le transporteur de transfert comprenant une bande transporteuse (11) guidée sur au moins un rouleau (16) disposé en une position fixe, au voisinage immédiat du transporteur d'évacuation (6), caractérisé en ce que la bande transporteuse (11) est guidée sur au moins un autre rouleau (12) disposé dans un cadre (8) supporté de façon à pouvoir se déplacer entre deux positions terminales, l'un de ces autres rouleaux (12), monté dans le cadre (8), étant, dans une première position terminale, présent à côté d'un plan vertical passant par l'intervalle entre la paire de rouleaux de façon à être disposé directement à côté d'une feuille de pâte (4) pendant vers le bas de l'intervalle entre les deux rouleaux (3), ce rouleau (12) passant en dessous de la paire de rouleaux (3) lorsque le cadre (8) est déplacé à l'autre position terminale de telle sorte que la feuille de pâte (4) est saisie par la bande transporteuse (11).

2. Appareil selon la revendication 1, caractérisé en ce qu'un détecteur (26) est prévu devant la paire de rouleaux (3), ce détecteur signalant l'arrivée d'une feuille de pâte (4) et, par l'intermédiaire d'une temporisation réglable, déclenchant le déplacement du cadre depuis la position terminale dans laquelle la feuille de pâte (4) pend librement vers le bas depuis la bande transporteuse (11).

3. Appareil selon l'une des revendications 1 ou 2, caractérisé en ce que le cadre (8), vu en section transversale, a principalement la forme de la moitié d'une enveloppe cylindrique (10) sur laquelle est guidée la bande transporteuse (11), le cadre (8) pouvant pivoter autour de l'axe (9) de cette enveloppe cylindrique (10), la bande transporteuse (11), passant sur les deux rouleaux (12,13) disposés près des extrémités du diamètre (14) de ce demi-cylindre (10), étant positionnée directement à côté d'une feuille de pâte (4) sortant de la paire de rouleaux (3) dans la première position terminale du cadre (8).

4. Appareil selon la revendication 3, caractérisé en ce que la bande transporteuse (11) passe sur un rouleau d'entraînement (16) disposé dans une position fixe proche du transporteur d'évacuation (6), de telle sorte que la portion de la bande transporteuse (11) s'étendant vers le transporteur d'évacuation s'étend pratiquement horizontalement.

5. Appareil selon l'une des revendications 3 ou 4, caractérisé en ce qu'un moyen support (18) est relié au cadre (8) à une certaine distance de cette portion de la bande transporteuse (11) s'étendant sur les rouleaux (12,13) disposés près des extrémités du diamètre (14) du demi-cylindre (10), de telle sorte qu'une feuille de pâte (4) peut librement pendre vers le bas entre ce moyen et la bande transporteuse (11) pendant le passage de la feuille de pâte (4) à travers la paire de rouleaux (3).

6. Appareil selon l'une des revendications 3 à 5, caractérisé en ce qu'un moyen support en forme d'arc (21), disposé en une position fixe, s'étend sur le côté de la feuille de pâte (4) opposé au cadre (8) lorsque la feuille de pâte (4) pend librement vers le bas de la paire de rouleaux (3) de telle sorte que, lorsque le cadre (8) pivote, la feuille de pâte (4) peut se trouver entre le cadre (8) et le moyen support en forme d'arc (21).

7. Appareil selon l'une des revendications 5 et 6, caractérisé en ce que ledit moyen support est formé par une voie à rouleaux (18,21) supportée de telle manière que la distance jusqu'à la bande transporteuse (11) est réglable.

8. Appareil selon la revendication 7, caractérisé en ce que ladite piste à rouleaux en forme d'arc (21) est reliés de façon pivotante au voisinage de son point le plus haut (24) et vient en contact avec un butoir réglable (25) sous l'effet d'un ressort et/ou sous l'effet de son propre poids, ledit butoir étant plus proche de l'extrémité inférieure de ladite voie à rouleaux (21).

9. Appareil selon l'une des revendications 1 et 2, caractérisé en ce que l'appareil comprend un chariot ou une poutre basculante pour supporter un ou plusieurs rouleaux de guidage (12) pouR la bande transporteuse (11).
